# EUROPÄISCHE PATENTSCHRIFT

(11) **EP 1 044 661 B1**
(45) Veröffentlichungstag und Bekanntmachung des Hinweises auf die Patenterteilung: **07.09.2005**
(21) Anmeldenummer: 00104607.7
(22) Anmeldetag: 03.03.2000
(51) Int. Cl.: A61C 17/20, A61J 1/14, A61J 1/00

(54) **Aufbewrungsbehälter für eine medizinischen Zecken dienende Aufschlämmung**
Container for storing a slurry useful for medical purposes
Récipient de stockage d'une suspension à usage médical

(30) Priorität: 11.04.1999 DE 19916154
(43) Veröffentlichungstag der Anmeldung: 18.10.2000
(73) Patentinhaber: Dürr Dental GmbH & Co. KG, 74321 Bietigheim-Bissingen (DE); Hahn, Rainer, Dr., 72074 Tübingen (DE)
(72) Erfinder: Hahn, Rainer, 72074 Tübingen (DE); Prager, Ulrich, 74323 Abstatt (DE); Grotz, Uwe, 74369 Löchgau (DE)
(74) Vertreter: Ostertag, Reinhard

(56) Entgegenhaltungen:
- CH-A- 475 757
- FR-A- 1 372 589
- JP-A- 10 016 990
- US-A- 3 924 335
- US-A- 5 139 168

## Beschreibung

Die Erfindung betrifft einen Aufbewahrungsbehälter für eine medizinischen Zwecken dienende Aufschlämmung.

In der JP 10 01-6990 A ist ein derartiger Aufbewahrungsbehälter offenbart, der einen flexiblen Beutel aufweist, der durch zwei verschweißte Folienstücke gebildet ist. Im Inneren dieses Beutels ist ein geringe Dicke aufweisender Distanzkörper angeordnet, der mit in Längsrichtung und in Querrichtung verlaufenden Rinnen versehen ist. In den zwischen diesen Rinnen verbleibenden Feldern sind Durchbrechungen vorgesehen.

Ein spezieller, besonders bevorzugter Anwendungsbereich derartiger Aufbewahrungsbehälter ist der Einsatz in Schall-oder Ultraschall-Behandlungsgeräten zur Parodontitisbehandlung oder zur mikroinvasiven Zahnpolitur bzw. Zahnpräparation, Periimplantitis-Therapie sowie im Rahmen von Wurzelkanalbehandlungen oder der Zahnrestauration. Die Aufschlämmung besitzt dabei eine Konsistenz und Inhaltsstoffe, welche die Wirkung des mit Schall- oder Ultraschallfrequenz schwingenden Behandlungsinstruments unterstützen. Derartige Aufschlämmungen müssen werksseitig unter hygienischen oder sterilen Bedingungen hergestellt und in einem Aufbewahrungsbehälter verschickt und gelagert werden, bis sie dann in dem Schall- oder Ultraschall-Behandlungsgerät zum Einsatz kommen. Dort werden sie an einen Strömungsweg für die Aufschlämmung angeschlossen, der in der Nähe des schwingenden Instrumentes endet. Der Beutel wird mit Hilfe einer Pumpe ausgesaugt, wobei sich seine gegenüberliegenden Wände zunehmend aneinander annähern.

Bei aus der Praxis bekannten Aufbewahrungsbehältern in Form von Beuteln ohne Distanzkörper konnten sich die gegenüberliegenden Wände des Beutels in der letzten Entleerungsphase lokal aneinander anlegen und "verkleben", so daß der weitere Durchgang von Aufschlämmung behindert war und deshalb eine restlose Entleerung des Beutels nicht erfolgte.

Aufgabe der vorliegenden Erfindung ist es, einen Aufbewahrungsbehälter der eingangs genannten Art so auszugestalten, daß eine vollständige Entleerung des Beutels möglich ist.

Diese Aufgabe ist erfindungsgemäß gelöst durch einen Aufbewahrungsbehälter mit den im Anspruch 1 angegebenen Merkmalen.

Bei einem erfindungsgemäßen Aufbewahrungsbehälter legen sich die gegenüberliegenden, flexiblen Wände des Beutels in der Endphase des Entleerungsvorganges an die Flächen des Distanzkörpers an, ohne dabei aber in die Nuten des Nutensystems einzutreten. Diese Nutensysteme bleiben daher als Durchströmungswege für die Aufschlämmung bis zum Schluß des Entleerungsvorganges frei, so daß die Aufschlämmung aus allen Bereichen des Beutels zuverlässig abgezogen werden kann.

Dabei ist erfindungsgemäß der Distanzkörper eine flache Platte, die auf gegenüberliegenden Seiten jeweils ein Nutensystem trägt. Der Distanzkörper nimmt auf diese Weise innerhalb des Beutels nur ein sehr geringes Volumen ein, welches als Befüllvolumen für die Aufschlämmung nicht zur Verfügung steht. Durch die auf beiden Seiten des Distanzkörpers vorgesehenen Nutensysteme ist eine zuverlässige Abfuhr der Aufschlämmung aus beiden Teilräumen möglich, in welche der Distanzkörper den Innenraum des Beutels unterteilt.

Besonders bewährt hat sich, wenn das Nutensystem fischgrätartig geformt ist und eine zur Befüll- und Entleerungstülle führende Mittelnut sowie zwei zur Mittelnut führende Sätze von seitlichen Nuten umfaßt. Auf diese Weise läßt sich in der Endphase der Beutelentleerung die Aufschlämmung aus allen Bereichen des Beutels zuverlässig absaugen.

Die Verschlußeinrichtung kann eine auf dem Ende der Befüll- und Entleerungstülle befestigbare Kappe umfassen, die in einem Bereich ihrer Stirnseite als durchstoßbare Membran ausgebildet ist, wobei zwischen der Kappe und der Befüll- und Entleerungstülle eine Dichtmembran aus elastomerem Material verspannt ist. Die so ausgestaltete Verschlußeinrichtung stellt einen Garantieverschluß dar, dessen Unversehrtheit eine Gewähr für Qualität und Zustand der im Beutel enthaltenen Aufschlämmung bietet. Zum Anschließen des Aufbewahrungsbehälters an die Ultraschall-Behandlungsvorrichtung wird eine Nadel durch die dünne Membran der Kappe sowie durch die elastische Dichtmembran hindurchgestoßen.

Bei einem bevorzugten Ausführungsbeispiel der Erfindung besteht die durchstoßbare Membran und/oder die Dichtmembran aus einem Material, welches sich nach dem Herausführen der Nadel wieder dicht verschließt. Dann kann auch ein angebrauchter Beutel dem Behandlungsgerät entnommen, zwischengelagert und bei neuer Behandlung später wieder eingesetzt und erneut angestochen werden. Dies kann bei Bedarf sogar mehrfach erfolgen.

Zweckmäßig ist, wenn die Befüll- und Entleerungstülle einen seitlichen, verschließbaren Befüllansatz aufweist.

Wird über diesen der Innenraum des Beutels mit der Aufschlämmung befüllt, kann bei noch fehlender Verschlußeinrichtung die Luft aus dem Beutel über das offene Ende der Befüll- und Entleerungstülle entweichen. Dies erleichtert die vollständige Befüllung des Beutels mit der Aufschlämmung.

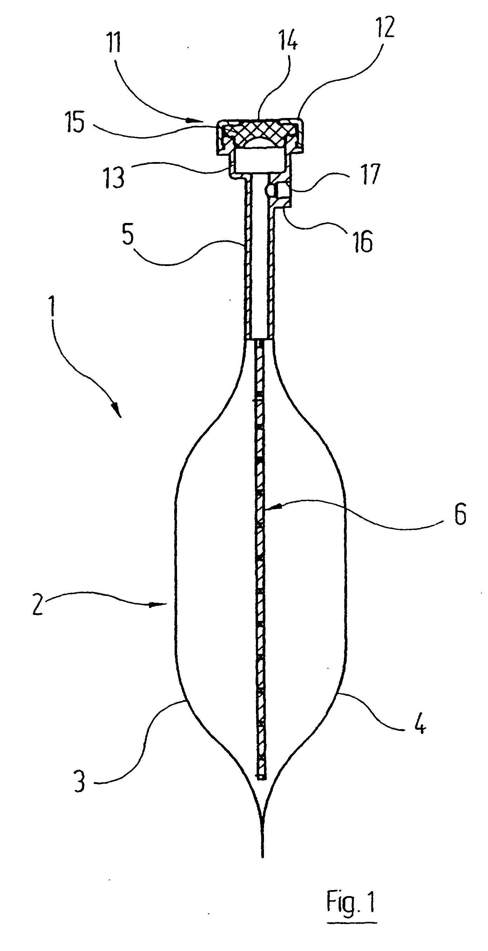

Ein Ausführungsbeispiel der Erfindung wird nachfolgend anhand der Zeichnung näher erläutert; es zeigen
- Fig. 1: einen Schnitt durch einen Aufbewahrungsbehälter für eine zur Dentalbehandlung verwendete Aufschlämmung;

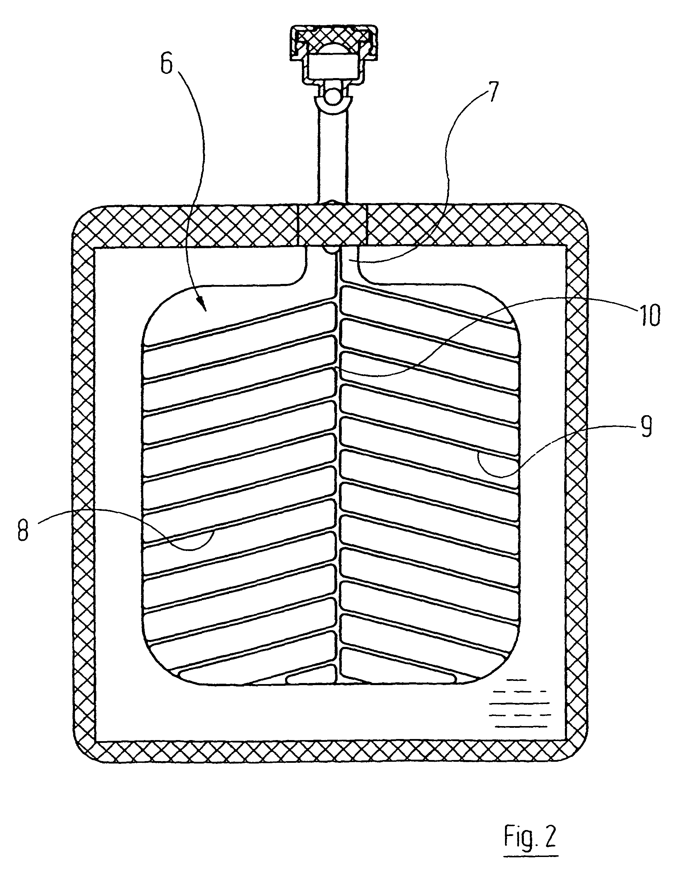

- Fig. 2: die Seitenansicht des Aufbewahrungsbehälters von Fig. 1, teilweise im Schnitt.

Der in der Zeichnung insgesamt mit dem Bezugszeichen 1 gekennzeichnete Aufbewahrungsbehälter dient der hygienischen oder sterilen Aufbewahrung einer wässrigen Aufschlämmung, die insbesondere bei der Ultraschall-Behandlung der Parodontitis, der Zahnreinigung oder der mikroinvasiven Zahnpräparation eingesetzt wird. Der Aufbewahrungsbehälter 1 umfaßt einen Beutel 2, der von zwei an ihren Rändern verschweißten flexiblen Folien 3, 4 gebildet wird. Der die Aufschlämmung enthaltende Innenraum des Beutels 2 ist über eine Befüll- und Entleerungstülle 5 zugänglich.

In der Mittelebene des Beutels 2 ist ein Distanzkörper 6 angebracht, der aus verhältnismäßig starrem Material hergestellt ist und die Form einer schmalen Platte aufweist. Er ist über einen Ansatz 7 mit der Befüll- und Entleerungstülle 5 verbunden.

Beide Oberflächen des Distanzkörpers 6 weisen ein fischgrätartiges System von Nuten 8, 9, 10 auf. Eine Mittelnut 10 durchsetzt den gesamten Distanzkörper 6 von unten nach oben und kommuniziert mit dem Innenraum der Befüllund Entleertülle 5. Zwei Sätze von seitlichen Nuten 8, 9 führen schräg von außen in die mittlere Nut 10; sie sind so gegen die mittlere Nut 10 angestellt, daß sie eine Strömung von außen nach innen zur mittleren Nut 10 und in dieser in der Zeichnung nach oben zur Befüllund Entleertülle 5 begünstigen.

Die Befüll- und Entleertülle 5 trägt an ihrem oberen Ende eine Verschlußeinrichtung 11. Diese umfaßt eine becherförmige Kunststoffkappe 12, die auf einen Kopf 13 der Befüll- und Entleertülle 5 aufgeklipst oder aufgeschweißt ist. Die Stirnfläche der Kunststoffkappe 12 ist im mittleren Bereich sehr dünn gehalten und bildet hier eine durchstoßbare Membran 14.

Zwischen der Kunststoffkappe 12 und dem Kopf 13 der Befüll- und Entleerungstülle 5 ist eine Dichtungsmembran 15 aus elastomerem Material verspannt.

Unterhalb des Kopfes 13 zweigt von dem Befüll- und Entleerungsstutzen 5 ein Befüllansatz 16 ab, dessen Durchgangsbohrung 17 in geeigneter Weise verschließbar ist.

Der beschriebene Aufbewahrungsbehälter wird wie folgt benutzt:

Werksseitig wird der Beutel 2 des Aufbewahrungsbehälters 1 unter hygienischen oder sterilen Bedingungen über die Durchgangsbohrung 17 des Befüllansatzes 16 mit der Aufschlämmung befüllt. Die Verschlußeinerichtung 11 ist dabei noch nicht angebracht, so daß die Luft aus dem Beutel 2 über den offenen Kopf 13 entweichen kann. Nach der Befüllung wird die Verschlußeinrichtung 11 durch Aufklipsen oder Anschweißen der Kappe 12, in welche die Dichtmembran 15 eingesetzt ist, angebracht. In dieser Form kann der Aufbewahrungsbehälter 1 versandt und beim Zahnarzt gelagert werden.

Bei Bedarf wird ein derartiger Aufbewahrungsbehälter 1 an ein Ultraschall-Behandlungsgerät angeschlossen. Dies geschieht dadurch, daß eine zum Ultraschall-Behandlungsgerät gehörende Nadel durch die Membran 14 der Kappe 12 sowie durch die Dichtmembran 15 hindurchgestochen wird. Die im Innenraum des Beutels 2 befindliche Aufschlämmung wird nun mit einer Pumpe des Ultraschall-Behandlungsgeräts aus dem Beutel 2 herausgesaugt und über den Befüllund Entleerungsstutzen 5 sowie die eingestochene Nadel dem Ultraschall-Behandlungsgerät zugeführt.

Durch den Distanzkörper 6 wird das vollständige Entleeren des Beutels 2 gewährleistet. Er verhindert nämlich, daß sich die beiden gegenüberliegenden Folien 3, 4, aus denen der Beutel 2 besteht, in der Endphase des Aussaugens lokal aneinander anlegen können, wodurch die weitere Entnahme der Aufschlämmung behindert werden könnte. Stattdessen legen sich die beiden Folien 3,4 in dieser Endphase des Aussaugens an die gegenüberliegenden Oberflächen des Distanzkörpers 6 an. Das in diesen Oberflächen enthaltene Muster aus Nuten 8, 9, 10, in welche die Folien 3, 4 bei diesem Vorgang nicht eintreten, gewährleistet eine zuverlässige Abfuhr der Aufschlämmung aus allen Bereichen des Beutels 2 hin zur Befüll- und Entleertülle 5.

Ist die Aufschlämmung aus dem Aufbewahrungsbehälter 1 vollständig entfernt, wird dieser durch einen neuen, gefüllten ersetzt.

## Patentansprüche

1. Aufbewahrungsbehälter für eine medizinischen Zwecken dienende Aufschlämmung mit einem flexiblen Beutel (2), mit einer zum Innenraum des Beutels (2) führenden Füll- und Entleerungstülle (5) sowie einer die Befüll- und Entleerungstülle (5) verschließenden Verschlußeinrichtung (11), bei der im Inneren des Beutels (2) ein Distanzkörper (6) angeordnet ist, in welchen mindestens ein mit der Befüllund Entleerungstülle (5) kommunizierendes Kanalsystem (8, 9, 10) eingearbeitet ist, wobei der Distanzkörper (6) eine flache Platte ist, **dadurch gekennzeichnet, daß** diese auf gegenüberliegenden Seiten jeweils ein Nutensystem (8, 9, 10) trägt, welches das Kanalsystem vorgibt.

2. Aufbewahrungsbehälter nach Anspruch 1 **dadurch gekennzeichnet, daß** das Nutensystem (8, 9, 10) fischgrätartig geformt ist und eine zur Befüllund Entleerungstülle (5) führende Mittelnut (10) und zwei zur Mittelnut (10) führende Sätze von seitlichen Nuten (8, 9) umfaßt.

3. Aufbewahrungsbehälter nach einem der vorhergehenden Ansprüche, **dadurch gekennzeichnet, daß** die Verschlußeinrichtung (11) eine auf dem Ende der Befüll- und Entleerungstülle (5) befestigte Kappe (12) umfaßt, die in einem Bereich ihrer Stirnseite als durchstoßbare Membran (14) ausgebildet ist, und daß zwischen der Kappe (12) und der Befüll- und Entleerungstülle (5) eine Dichtmembran (15) aus elastomerem Material verspannt ist.

4. Aufbewahrungsbehälter nach Anspruch 3, **dadurch gekennzeichnet, daß** die durchstoßbare Membran (14) und/oder die Dichtmembran (15) aus einem Material besteht, welches sich nach dem Herausführen der Nadel wieder dicht verschließt.

5. Aufbewahrungsbehälter nach einem der vorhergehenden Ansprüche, **dadurch gekennzeichnet, daß** die Befüllund Entleerungstülle (5) einen seitlichen, verschließbaren Befüllansatz (16) aufweist.

## Claims

1. Storage container for a suspension used for medical purposes, comprising a flexible pouch (2), a charging and discharging nozzle (5) leading to the interior of the pouch (2), and a sealing device (11) which seals the charging and discharging nozzle (5) and at which a distance element (6) is disposed in the interior of the pouch (2), into which element at least one channel system (8, 9, 10) communicating with the charging and discharging nozzle (5) is incorporated, wherein the distance element (6) is a flat plate, **characterised in that** this bears a groove system (8, 9, 10), which provides the channel system, on each opposite side.

2. Storage container according to Claim 1, **characterised in that** the groove system (8, 9, 10) is of a herringbone-like shape and comprises a central groove (10) leading to the charging and discharging nozzle (5) and two sets of lateral grooves (8, 9) leading to the central groove (10).

3. Storage container according to any one of the preceding Claims, **characterised in that** the sealing device (11) comprises a cap (12) which is fastened on the end of the charging and discharging nozzle (5) and formed in one region of its end side as a pierceable membrane (14), and that a sealing membrane (15) of elastomeric material is stretched between the cap (12) and the charging and discharging nozzle (5).

4. Storage container according to Claim 3, **characterised in that** the pierceable membrane (14) and/or the sealing membrane (15) consist(s) of a material which hermetically reseals itself after the needle is withdrawn.

5. Storage container according to any one of the preceding Claims, **characterised in that** the charging and discharging nozzle (5) comprises a lateral, sealable charging projection (16).

## Revendications

1. Récipient de stockage pour une suspension à usage médical, avec une poche souple (2), avec un embout (5) de remplissage et de vidage menant à l'intérieur de la poche (2), et avec un dispositif de fermeture (11) fermant l'embout (5) de remplissage et de vidage, selon lequel un corps d'écartement (6) est disposé à l'intérieur de la poche (2), corps dans lequel est ménagé au moins un système de canaux (8, 9, 10) communiquant avec l'embout (5) de remplissage et de vidage, le corps d'écartement (6) étant une plaque plate, **caractérisé en ce que** cette plaque porte sur des côtés opposés un système respectif de rainures (8, 9, 10) qui prédéfinit le système de canaux.

2. Récipient de stockage selon la revendication 1, **caractérisé en ce que** le système de rainures (8, 9, 10) est réalisé en forme d'arête de poisson et comprend une rainure centrale (10) menant à l'embout (5) de remplissage et de vidage et deux groupes de rainures latérales (8, 9) menant à la rainure centrale (10).

3. Récipient de stockage selon l'une des revendications précédentes, **caractérisé en ce que** le dispositif de fermeture (11) comprend un capuchon (12) qui est fixé sur l'extrémité de l'embout (5) de remplissage et de vidage et qui est réalisé, dans la région de sa face frontale, sous forme de membrane transperçable (14), et **en ce qu'**une membrane d'étanchéité (15) en matériau élastomère est serrée entre le capuchon (12) et l'embout (5) de remplissage et de vidage.

4. Récipient de stockage selon la revendication 3, **caractérisé en ce que** la membrane transperçable (14) et/ou la membrane d'étanchéité (15) sont constituées d'un matériau qui se referme de manière étanche après avoir retiré l'aiguille.

5. Récipient de stockage selon l'une des revendications précédentes, **caractérisé en ce que** l'embout (5) de remplissage et de vidage présente un embout de remplissage latéral (16) obturable.
